# DEMANDE DE BREVET EUROPEEN

(11) **EP 1 266 569 A1**
(43) Date de publication de la demande: **18.12.2002**
(21) Numéro de dépôt: 01114146.2
(22) Date de dépôt: 11.06.2001
(51) Int. Cl.: A01M 23/08, A01M 23/18

(54) **Procédé et dispositif de lutte biologique contre les micromammifères**

(71) Demandeur: Saucy, Francis, 1641 Vuippens (CH)
(72) Inventeur: Saucy, Francis, 1641 Vuippens (CH)
(74) Mandataire: Micheli & Cie

(57) **Abrégé**

Le dispositif de protection des cultures des dégradations causées par les populations de petits mammifères indésirables, comprenant mulots, taupes, etc., comporte une barrière (2) infranchissable pour ces mammifères indésirables entourant la zone à protéger et formant une enceinte principale (1). Il comporte encore un passage à sens unique (4) permettant aux mammifères indésirables de sortir de l'enceinte (1) mais les empêchant d'y rentrer.

## Description

Dans de nombreuses régions, cultivées ou non, telles que vergers, prairies, bords de routes, aérodromes, exploitations forestières, etc., des dégâts considérables sont causés par les petits mammifères tels que les taupes, campagnols, mulots et autres micromammifères.

Actuellement, la seule protection efficace réside dans la dissémination de poisons pour tuer les animaux indésirables. Cette pratique n'est pas satisfaisante car les poisons utilisés tuent également des animaux non ciblés et sont également toxiques pour les êtres humains. C'est pourquoi l'utilisation de poisons n'est qu'un pis-aller qui devra être abandonné tôt ou tard.

Des pièges ont été conçus pour être placés soit en surface, soit dans les galeries souterraines creusées par les taupes, campagnols, mulots et autres petits mammifères indésirables, mais leur efficacité demeure très limitée.

Des études faites sur des populations de campagnols montrent que la colonisation de nouvelles contrées est le fait des jeunes qui quittent le terrier natal vers l'âge de 2-8 semaines, généralement par temps de pluie et de nuit pour échapper aux prédateurs. Ils émigrent sur des distances de quelques dizaines ou centaines de mètres pour fonder de nouvelles colonies. En effet, ces petits animaux répugnent à creuser des galeries aussi longues et il leur faut émigrer à l'air libre. Ceci explique également pourquoi le piégeage traditionnel ne permet pas de contrôler leurs populations de manière efficace.

La présente invention a pour but la réalisation d'un dispositif de lutte biologique contre les micromammifères et de protection des cultures qui est basé sur cette dispersion à l'air libre des petits mammifères indésirables et permet de diminuer drastiquement la population de ces animaux dans un périmètre déterminé.

La présente invention a pour objet un procédé et un dispositif de lutte biologique contre les micromammifères et de protection des cultures qui se distingue par les caractéristiques énoncées à la revendication 1 et à la revendication 3.

Le dessin annexé illustre schématiquement et à titre d'exemple deux formes d'exécution du dispositif de protection des cultures selon la présente invention.

La figure 1 est une vue en plan d'une première forme d'exécution du dispositif de protection.

La figure 2 est une vue en coupe longitudinale, à plus grande échelle, d'un passage à sens unique pour les animaux nuisibles et d'une partie de la paroi du dispositif.

La figure 3 est une coupe transversale du passage à sens unique illustré à la figure 2, traversant la paroi du dispositif.

La figure 4 est une vue en plan d'une seconde forme d'exécution du dispositif de protection.

Le procédé selon la présente invention pour protéger une zone de culture agricole ou forestière, bords de routes, aérodrome, terrain de sport par exemple, des dégâts occasionnés par une population de petits mammifères ou rongeurs tels que des taupes, campagnols ou mulots, consiste à encercler une surface d'une barrière par exemple en matière plastique, dont le bas est enterré dans le sol et à munir cette barrière de passages à sens unique pour les petits mammifères que l'on veut éliminer de la zone ainsi encerclée. La hauteur de cette barrière est suffisante pour empêcher les petits mammifères indésirables de la franchir, par contre les écureuils, belettes et autres mammifères non visés peuvent facilement passer par-dessus sans être gênés dans leurs mouvements ou habitudes.

De cette façon, les petits mammifères indésirables faisant partie de la population située dans l'enceinte formée par la barrière peuvent franchir celle-ci par les passages à sens unique en direction de l'extérieur de ladite enceinte, mais ne peuvent plus revenir dans celle-ci.

Si les dimensions de l'enceinte formée par la barrière sont calculées de telle sorte que la distance de migration des jeunes mammifères indésirables soit supérieure au côté ou au diamètre de l'enceinte, ces jeunes mammifères émigreront hors de l'enceinte par les passages à sens unique et la population de mammifères indésirables à l'intérieur de l'enceinte restera faible et finira par s'éteindre.

Dans une variante du procédé, on place autour de la sortie de chaque passage à sens unique une enceinte secondaire de petite dimension dans laquelle les mammifères indésirables s'échappant de la grande enceinte seront prisonniers. Cette population prisonnière pourra être capturée pour faire l'objet d'études ou pour être exterminée. Une élimination naturelle de cette population captive est aussi facilitée, les rapaces et autres prédateurs pouvant facilement attraper les membres de cette population captive.

Grâce à ce procédé absolument écologique, on arrive à supprimer les populations de petits mammifères indésirables d'une zone déterminée tout en facilitant la prise de nourriture pour les rapaces et autres prédateurs souvent protégés, ce qui facilite leur implantation dans une région.

Il est évident que la taille de l'enceinte principale, celle de l'enceinte secondaire et celle du passage à sens unique sont déterminées en fonction de la taille des animaux à capturer.

L'enceinte principale peut présenter une surface comprise entre quelques ares, voire même plusieurs hectares, tandis que l'enceinte secondaire sera le plus souvent de dimensions inférieures à un are, de préférence quelques mètres carrés. La section du passage à sens unique pourra être comprise entre quelques centimètres carrés et un décimètre carré ou plus.

Le dispositif de lutte biologique contre les micromammifères et de protection des cultures selon l'invention comporte une enceinte principale 1 formée d'une paroi 2 dont le bord inférieur est de préférence enterré sur une hauteur de 5 à 20 centimètres. Cette paroi 2 est continue et fermée sur elle-même et présente une hauteur hors sol de 25 à 50 cm ou plus suivant la taille des animaux indésirables à capturer. Cette hauteur doit être telle que les animaux que l'on veut éradiquer de la surface encerclée par cette paroi ne puissent pas franchir cette barrière. Des piquets ou poteaux 3 peuvent être prévus pour maintenir cette paroi verticale en position de service.

La surface encerclée par cette paroi ou barrière est généralement comprise entre quelques ares et plusieurs hectares et dépend bien entendu de la taille, de la population et de l'espèce de mammifères indésirables dont on veut protéger cette zone.

Cette barrière peut être réalisée en tôles, à l'aide de bandes de matière plastique semi-rigide ou tout autre matériau adéquat.

Cette enceinte principale 1 est munie d'un ou plusieurs passages à sens unique 4 traversant la paroi ou barrière 2. Ces passages à sens unique sont constitués de manière à laisser sortir librement les mammifères nuisibles hors de l'enceinte principale 1, mais à ne pas les laisser entrer dans celle-ci.

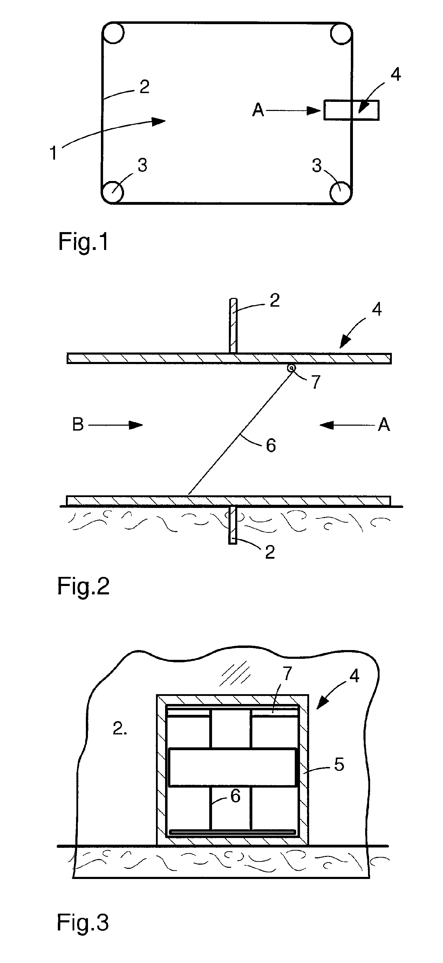

Ces passages à sens unique 4 sont par exemple réalisés de la manière illustrée aux figures 2 et 3. Chaque passage est délimité par un tube 5 de section carrée, rectangulaire ou circulaire, de préférence en matière plastique rigide. Ce tube pourrait également être métallique. La section de ce tube peut varier généralement de quelques centimètres carrés à un ou deux décimètres carrés, suivant la taille des mammifères devant le traverser. La paroi extérieure du tube 5 est rendue solidaire de la barrière 2 par soudage, collage ou tout autre moyen.

A l'intérieur du tube 5 se trouve un volet 6 articulé autour d'un axe 7 perpendiculaire à l'axe du tube. La longueur du volet 6 est telle qu'en position de repos il s'étend de façon inclinée dans le tube 5 en direction de l'extérieur de l'enceinte 1.

Lorsqu'un mammifère pénètre dans le tube 5 suivant la flèche A, il pousse le volet 6 qui se soulève et le laisse passer. Si par contre un mammifère pénètre dans le tube depuis son autre extrémité, sens de la flèche B, il bute contre le volet 6 qu'il ne peut donc pas soulever. Il s'agit donc bien d'un passage à sens unique.

Ce passage à sens unique peut être réalisé d'une autre manière, par exemple à l'aide d'un volet basculant dans le tube ou d'un volet vertical, articulé en haut du tube et butant contre un taquet fixé au bas du tube.

Ainsi les jeunes mammifères issus de la population adulte située à l'intérieur de l'enceinte principale sortent de cette enceinte lors de leur dispersion naturelle. La population à l'intérieur de l'enceinte 1 n'augmentant pas, elle diminue en fonction de la mortalité de la population adulte. Ainsi, on a de façon écologique, sans poisons ou autres pièges destructeurs, limité voire éliminé la population de mammifères indésirables à l'intérieur de l'enceinte principale.

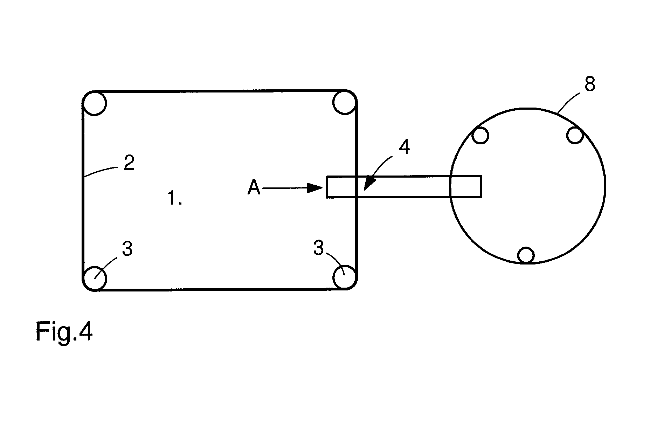

La figure 4 illustre une variante du dispositif qui comporte encore un collecteur ou enceinte secondaire 8 de plus petite taille que l'enceinte principale 1 connectée à la sortie du ou des passages à sens unique 4. De cette façon les mammifères indésirables sortent de l'enceinte principale 1, se retrouvent confinés dans le collecteur ou l'enceinte secondaire où ils peuvent être capturés vivants pour être étudiés en laboratoire, éliminés ou s'ils sont laissés dans cette enceinte secondaire 8, ils servent de nourriture aux rapaces et prédateurs naturels, animaux qui sont souvent protégés.

Il est évident que le dispositif peut comporter plusieurs passages à sens unique, chacun de ceux-ci reliant l'enceinte principale à un ou plusieurs collecteurs ou enceintes secondaires distinctes.

Les passages à sens unique peuvent être réalisés différemment tant qu'ils ne permettent le passage des mammifères nuisibles que dans un sens, vers l'extérieur de l'enceinte principale.

De préférence, les enceintes principale et secondaire sont réalisées à l'aide de bandes de matière plastique semi-rigide lisse, d'une hauteur suffisante pour interdire aux mammifères indésirables de la franchir et dont la tranche inférieure est enfoncée dans le sol. De plus, les collecteurs ou enceintes secondaires sont munis d'un fonds en grillage ou en matière plastique empêchant les animaux de creuser et de s'échapper dans la profondeur du sol.

## Revendications

1. Procédé de lutte biologique contre les micromammifères et de protection des cultures contre les déprédations causées par les populations de petits mammifères, tels que campagnols, taupes, mulots, etc., **caractérisé par le fait qu'**on entoure la zone à protéger d'une barrière (2) infranchissable pour ces animaux pour former une enceinte principale (1) et qu'on ménage dans cette enceinte principale (1) au moins un passage à sens unique (4) permettant aux petits mammifères indésirables situés dans l'enceinte principale d'en sortir mais pas d'y revenir.

2. Procédé selon la revendication 1, **caractérisé par le fait que** le passage à sens unique (4) permettant aux petits mammifères indésirables de sortir de l'enceinte principale (1) conduit à une enceinte secondaire (8) collectrice où lesdits mammifères indésirables sont regroupés aux fins d'élimination, de capture pour leur étude ou livrés aux prédateurs naturels.

3. Dispositif de protection des cultures des dégradations causées par les populations de petits mammifères indésirables tels que campagnols, mulots, taupes, etc., **caractérisé par le fait qu'**il comporte une barrière infranchissable (1) pour ces mammifères indésirables entourant la zone à protéger et formant une enceinte principale (1), ainsi qu'au moins un passage à sens unique (4) permettant aux mammifères indésirables de sortir de cette enceinte (1) mais les empêchant d'y rentrer.

4. Dispositif selon la revendication 3, **caractérisé par le fait que** la barrière (2) formant l'enceinte principale (1) est réalisée à l'aide de bandes de matière plastique semi-rigide lisse placées verticalement sur le sol pour former une enceinte fermée sur elle-même, la tranche inférieure de cette bande étant enterrée.

5. Dispositif selon la revendication 3 ou 4, **caractérisé par le fait qu'**il comporte une enceinte secondaire (8) collectrice dans laquelle débouche le passage à sens unique (4).

6. Dispositif selon la revendication 5, **caractérisé par le fait que** la barrière de l'enceinte secondaire (8) collectrice est réalisée comme l'enceinte principale (1), cette enceinte secondaire (8) étant toutefois de plus faible dimension, et munie d'un fonds empêchant les animaux de creuser dans le sol.

7. Dispositif selon l'une des revendications 3 à 6, **caractérisé par le fait que** le passage à sens unique (4) comporte un conduit traversant la barrière de l'enceinte principale, ce conduit étant muni d'un volet mobile (6) s'escamotant sous la poussée d'un animal se dirigeant vers l'extérieur de l'enceinte principale (1), mais interdisant tout passage dans l'autre sens

8. Dispositif selon l'une des revendications 3 à 7, **caractérisé par le fait qu'**il comporte plusieurs passages à sens unique reliant chacun l'enceinte principale (1) à une enceinte secondaire (8) distincte.

9. Dispositif selon l'une des revendications 3 à 7, **caractérisé par le fait qu'**il comporte plusieurs passages à sens unique (4) reliant chacun l'enceinte principale (1) à une enceinte secondaire (8).
